Europäisches Patentamt

European Patent Office

Office européen des brevets

(11) Numéro de publication: **0 266 255**
**B1**

## (12) FASCICULE DE BREVET EUROPEEN

(45) Date de publication du fascicule du brevet:
07.06.89

(51) Int. Cl.⁴: **B62D 25/14**, B62D 1/16

(21) Numéro de dépôt: **87402298.1**

(22) Date de dépôt: **14.10.87**

(54) Colonne de direction de véhicule pré-assemblée.

(30) Priorité: 30.10.86 FR 8615131

(43) Date de publication de la demande:
04.05.88 Bulletin 88/18

(45) Mention de la délivrance du brevet:
07.06.89 Bulletin 89/23

(84) Etats contractants désignés:
DE GB IT

(56) Documents cités:
EP-A- 0 081 656
EP-A- 0 124 093
GB-A- 154 171
US-A- 2 716 032

PATENT ABSTRACTS OF JAPAN,
vol. 7, no. 98 (M-210)[1243], 26 avril 1983; &
JP-A- 58 20 560 (ISEKI NOKI K.K.) 07-02-1983
PATENT ABSTRACTS OF JAPAN,
vol. 7, no. 177 (M-233)[1322], 5 août 1983; &
JP-A-58 78 864 (NISSAN JIDOSHA K.K.) 12-05-1983

(73) Titulaire. AUTOMOBILES PEUGEOT, 75, avenue de la
Grande Armée, F-75116 Paris(FR)
Titulaire: AUTOMOBILES CITROEN, 62 Boulevard
Victor-Hugo, F-92200 Neuilly-sur-Seine(FR)

(72) Inventeur: Froumajou, Armand, 11 Bis, Rue Docteur
Laennec, F-95520 Osny(FR)

(74) Mandataire: Bouget, Lucien et al, Cabinet
Lavoix 2, Place d'Estienne d'Orves, F-75441 Paris
Cédex 09(FR)

## Description

L'invention concerne une colonne de direction de véhicule pré-assemblée.

Une colonne de direction de véhicule comporte, de manière classique, un axe supérieur portant un volant à l'une de ses extrémités et un axe inférieur relié au pignon de crémaillère de la direction. L'axe supérieur et le volant sont disposés à l'intérieur de l'habitacle du véhicule alors que le pignon et la crémaillère sont situés dans le compartiment moteur séparé de l'habitacle par une paroi appelée tablier. L'axe supérieur et l'axe inférieur sont disposés dans le prolongement l'un de l'autre et reliés de façon articulée par l'intermédiaire d'un joint de cardan.

Le montage de la colonne de direction sur le véhicule est réalisé de manière habituelle en fixant la colonne sur une potence ou une traverse faisant partie de la structure du véhicule par l'intermédiaire d'un support comportant deux paliers dans lesquels est monté l'axe supérieur de la colonne solidaire du volant.

L'axe inférieur de la colonne de direction, articulé sur l'axe supérieur grâce à un cardan, est également relié au pignon de crémaillère par l'intermédiaire d'un joint de cardan ou flector. L'axe inférieur traverse donc le tablier, si bien qu'il est nécessaire de prévoir dans ce tablier une fenêtre de dimension suffisante pour permettre le passage de l'axe, compte tenu des tolérances de dimensionnement et de montage et également pour autoriser les déplacements nécessaires pour le montage de l'axe supérieur de la colonne sur la structure du véhicule et pour le raccordement de l'axe inférieur au pignon de crémaillère. Les dimensions de la fenêtre de passage doivent également tenir compte de l'inclinaison relative des divers éléments à raccorder.

Cette fenêtre est finalement obturée par un soufflet ou une pièce souple analogue portant le joint de traversée de l'axe inférieur de la colonne. Cette pièce constitue une discontinuité dans l'isolation acoustique du tablier.

Enfin, le montage d'une telle colonne de direction ne peut être réalisée que de façon manuelle.

On a également proposé de réaliser la partie supérieure de la colonne de direction sous forme pré-assemblée, cette partie supérieure étant montée sur un support de colonne ou sur un ensemble constituant la planche de bord du véhicule. Au montage de la colonne, on vient fixer le support ou l'ensemble au niveau d'une ouverture traversant le tablier, l'ensemble constituant la planche du bord du véhicule pouvant même se substituer complètement au tablier.

Cependant, des tolérances dimensionnelles et jeux de montage doivent toujours être prévus et les difficultés rencontrées lors du montage subsistent, d'autant plus que la direction du montage est imposée pour l'ensemble du poste de conduite.

Il en résulte, comme dans le cas du montage classique, une étanchéité et une isolation acoustique insuffisantes, au niveau de la colonne de direction.

Le but de l'invention est donc de proposer une colonne de direction de véhicule pré-assemblée comportant un axe supérieur portant un volant à l'une de ses extrémités, placé à l'intérieur de l'habitacle lorsque la colonne est montée sur le véhicule et un axe inférieur articulé par l'une de ses extrémités sur l'extrémité de l'axe supérieur opposée au volant et relié par son autre extrémité, lorsque la colonne est montée sur le véhicule, à un pignon de crémaillère situé dans le compartiment moteur du véhicule, colonne de direction qui permette d'obtenir une très bonne étanchéité et une très bonne isolation acoustique au niveau du passage de la colonne à travers le tablier ainsi qu'une possibilité de montage de la colonne sur le véhicule par une opération simple et facilement automatisable.

Dans ce but, la colonne de direction suivant l'invention comporte un support unique pré-assemblé portant l'axe supérieur par l'intermédiaire de deux paliers et l'axe inférieur par l'intermédiaire d'un palier de traversée isolant acoustique situé sur une partie du support constituant une paroi de séparation entre l'habitacle et le compartiment moteur.

Afin de bien faire comprendre l'invention, on va maintenant décrire à titre d'exemple non limitatif, en se référant aux figures jointes en annexe, un mode de réalisation d'une colonne de direction suivant l'invention comportant un support en une seule pièce.

La figure 1 est une vue en coupe et en élévation de la colonne de direction suivant l'invention montée sur un véhicule.

La figure 2 est une vue en coupe d'un premier mode de réalisation du palier de traversée de l'axe inférieur de la colonne.

La figure 3 est une vue en coupe d'un second mode de réalisation d'un palier de traversée de l'axe inférieur de la colonne.

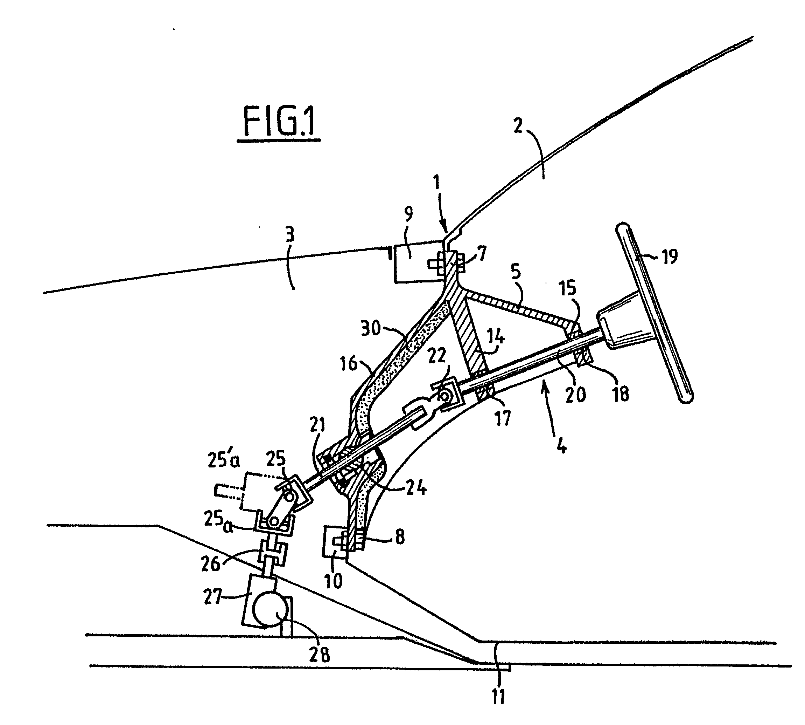

Sur la figure 1, on voit un véhicule 1 à l'intérieur duquel sont délimités un habitacle 2 et un compartiment moteur 3. La colonne de direction désignée de façon générale par le repère 4 est située partiellement à l'intérieur de l'habitacle 2 et partiellement à l'intérieur du compartiment moteur 3.

La colonne 4 comporte un support 5 fixé par des vis telles que 7 et 8 sur des éléments de structure du véhicule tels que 9 et 10.

Le support 5 comporte une paroi 16 fixée à ses extrémités haute et basse respectivement sur les éléments de structure 9 et 10 du véhicule et constituant le tablier séparant l'habitacle 2 du compartiment moteur 3. A sa partie supérieur, la paroi 16 est solidaire de deux bras de fixation 14 et 15 faisant partie du support 5 et portant, par l'intermédiaire de paliers 17 et 18, l'axe supérieure 20 de la colonne placé dans l'habitacle 2 et solidaire à l'une de ses extrémités du volant 19.

L'extrémité de l'axe supérieur 20 opposée au volant 19 est reliée par l'intermédiaire d'un joint de cardan 22 à l'axe inférieur 21 de la colonne de direction.

La paroi 16 faisant partie du support 5 et constituant le tablier du véhicule est traversée par une ouverture permettant le passage de l'axe inférieur 21 de la colonne qui est monté dans un palier de traversée 24 assurant le montage de l'axe inférieur 21 sur le support 5.

L'extrémité de l'axe inférieur 21 opposée au cardan 22 de liaison à l'axe supérieur 20 est reliée, par l'intermédiaire d'un double joint de cardan 25 et d'un manchon cannelé et coulissant 26, au pignon de crémaillère 27, à l'intérieur du compartiment moteur 3. Le pignon de crémaillère 27 engrène avec la crémaillère de direction 28 montée transversalement dans le compartiment moteur du véhicule. Pour cela, l'élément terminal 25a du double cardan constituant le dernier tronçon de la colonne de direction et l'axe du pignon de crémaillère 27 sont réalisés sous la forme de pièces cannelées pouvant être engagées à l'intérieur du manchon cannelé coulissant 26. Le manchon 26 est ensuite maintenu en position de jonction par un moyen de serrage non représenté.

Grâce à la présence du double cardan 25, la partie 25a de ce double joint de cardan constituant la partie terminale de la colonne de direction peut être placée dans une position relevée 25'a représentée en pointillés sur la figure 1 qui permet de réaliser facilement l'introduction de la partie terminale de la colonne de direction dans le compartiment moteur 3, au moment du montage de cette colonne de direction. Ainsi, il n'y a pas lieu de prévoir une ouverture dans l'habitacle jusqu'à un niveau inférieur situé peu au-dessus du plancher 11. Au contraire, la structure 10 pourra se trouver à une certaine hauteur et assurer la rigidité du soubassement de l'habitacle.

La paroi 16 faisant partie du support 5 et constituant le tablier est revêtue sur toute sa surface d'une couche 30 de matériau d'isolation acoustique uniquement interrompue au niveau de l'ouverture du palier de traversée 24.

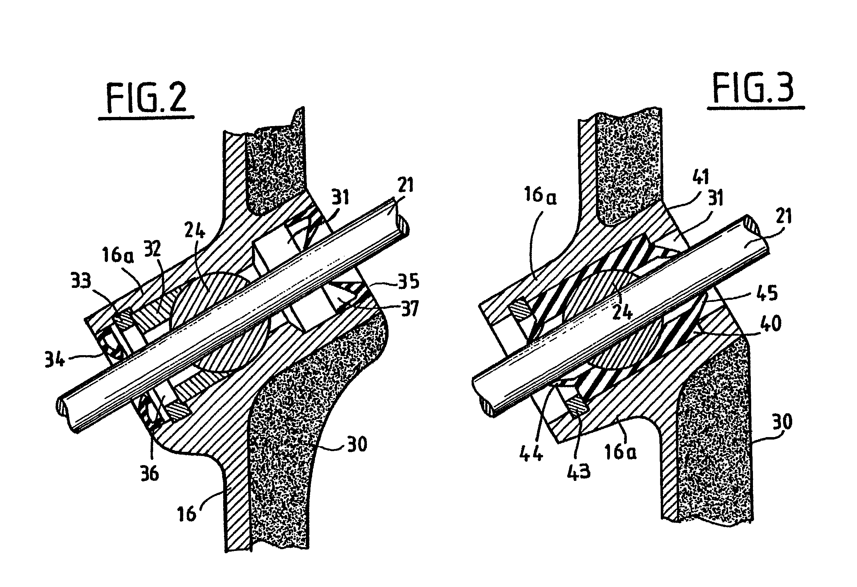

Sur la figure 2, on voit un mode de réalisation du palier de traversée 24 qui est constitué par une rotule sphérique en matière synthétique montée dans l'ouverture 31 traversant la paroi 16 et permettant le passage de l'axe inférieur de direction 21. L'ouverture 31 est ménagée à l'intérieur d'un manchon 16a réalisé d'une seule pièce avec la paroi 16. La rotule du palier 24 est maintenue en place à l'intérieur du manchon 16a par un coussinet 32 et un clip 33 engagés dans une gorge du manchon 16a à l'extrémité du coussinet 32 opposée à la rotule 24. Deux joints à lèvres 34 et 35 situés aux extrémités du manchon 16a et fermant l'ouverture 31 à chacune de ses extrémités autour de l'axe inférieur 21 délimitent deux chambres 36 et 37, de part et d'autre du palier à rotule 24, à l'intérieur de l'ouverture 31.

La disposition du palier représenté sur la figure 2 permet d'obtenir une parfaite continuité de l'isolation acoustique au niveau du passage de l'axe inférieur de la colonne de direction, puisque la couche d'isolation acoustique 30 se raccorde parfaitement au manchon 16a servant de logement au palier 24, qu'il n'y a pas d'interruption de la matière rigide et, qu'en outre, les deux chambres 36 et 37 limitées par les joints à lèvres 34 et 35 respectivement constituent des atténuateurs des vibrations sonores.

La disposition du palier représenté sur la figure 3 présente les mêmes avantages et les éléments correspondants ont été désignés sur les figures 2 et 3 par les mêmes repères.

Dans le mode de réalisation représenté sur la figure 3, la rotule 24 est montée à l'intérieur d'un coussinet 40 en caoutchouc monté à l'intérieur de l'ouverture 31 du manchon 16a. Le manchon 16a comporte un rebord d'appui annulaire 41 sur lequel le coussinet 40 vient en butée. Un clip 43 permet de compléter la fixation du coussinet 40 dans le manchon 16a. Le coussinet 40 comporte des joints à lèvres incorporés 44 et 45 venant réaliser l'étanchéité autour de l'axe inférieur de direction 21, de part et d'autre du palier à rotule 24.

L'utilisation d'un palier à rotule dans les deux modes de réalisation permet à l'axe inférieur 21 d'assurer son auto-alignement pendant le montage de la colonne de direction sur le véhicule.

Ce montage est particulièrement aisé puisque l'ensemble pré-assemblé de la colonne de direction comporte l'axe supérieur de direction 20 solidaire de son volant 19 et l'axe inférieur de direction 21 reliés l'un à l'autre et fixés sur un même support 5 par l'intermédiaire de paliers. En outre, l'axe inférieur porte un double joint de cardan 25 pour sa liaison avec le pignon de crémaillère.

Le montage sur le véhicule est réalisé en amenant, par un déplacement dans la direction horizontale, la colonne de direction pré-assemblée, dans la position représentée sur la figure 1, le tronçon terminal 25a de cette colonne de direction étant dans la position relevée 25'a. On effectue la fixation de la colonne de direction pré-assemblée sur la structure du véhicule, par l'intermédiaire des vis telles que 7 et 8.

Ces opérations de montage peuvent être réalisées de façon entièrement automatisée.

La seule opération manuelle à effectuer consiste à réaliser le raccordement entre le tronçon d'extrémité 25a de la colonne de direction constituée par l'élément terminal du double joint de cardan 25 avec le pignon de crémaillère 27. Pour cela, la partie 25a du double joint de cardan est rabattue depuis sa position 25'a en pointillés sur la figure 1, jusqu'à sa position en traits pleins dans laquelle elle se trouve dans le prolongement de l'axe du pignon 27. Le manchon cannelé 26 permet de réaliser la jonction entre les deux pièces.

L'invention ne se limite pas aux modes de réalisation qui ont été décrits.

C'est ainsi que dans certaines dispositions, il n'est pas nécessaire d'utiliser un double joint de cardan pour relier l'extrémité de la colonne de direction au pignon de crémaillère, un simple cardan pouvant accomplir cette fonction de façon satisfaisante.

Le support 5 de la colonne de direction peut être réalisé en une seule pièce ou, au contraire, comporter un élément principal, par exemple la paroi supportant le palier de traversée sur lequel sont rapportés des éléments assurant la fixation et le guidage de l'axe supérieur de direction par l'intermédiaire de paliers. Ce support comporte une paroi dans laquelle est monté le palier de traversée de l'axe inférieur de direction qui peut constituer l'ensemble du tablier séparant l'habitacle du compartiment moteur ou simplement une partie de ce tablier. Le support peut être également intégré à une pièce à fonctions multiples faisant par exemple office de planche de bord du véhicule. Le support pourra être réalisé en toute matière dont la résistance mécanique et la facilité de mise en oeuvre sont satisfaisantes. Le support pourra comporter également différentes parties réalisées en des matières différentes. La partie du support constituant la paroi de séparation entre l'habitacle et le compartiment moteur pourra être revêtue de toute matière d'isolation acoustique.

Le palier de traversée de l'axe inférieur de direction pourra être d'un type différent du type à rotule qui a été décrit à partir du moment où ce palier admet une certaine latitude d'orientation de l'axe inférieur de direction, pour son montage et son alignement avec les autres éléments correspondants de la colonne de direction.

Enfin, la colonne de direction suivant l'invention peut trouver une application dans tout type de véhicule comportant un poste de conduite à l'intérieur d'un habitacle et un compartiment moteur renfermant des éléments mécaniques d'actionnement des roues dirigées du véhicule.

**Revendications**

1.- Colonne de direction de véhicule pré-assemblée comportant un axe supérieur (20) portant un volant (19) à l'une de ses extrémités, placé à l'intérieur de l'habitacle (2) du véhicule lorsque la colonne (4) est montée sur le véhicule et un axe inférieur (21) articulé par l'une de ses extrémités sur l'extrémité de l'axe supérieur (20) opposée au volant (19) et relié, par son autre extrémité, lorsque la colonne est montée sur le véhicule, à un pignon de crémaillère (27) situé dans le compartiment moteur (3) du véhicule, caractérisée par le fait qu'elle comporte un support unique pré-assemblé portant l'axe supérieur (20) par l'intermédiaire de deux paliers (17, 18) et l'axe inférieur (21), par l'intermédiaire d'un palier de traversée (24) isolant acoustique situé sur une partie (16) du support (5) constituant une paroi de séparation entre l'habitacle (2) et le compartiment moteur (3).

2.- Colonne de direction suivant la revendication 1, caractérisée par le fait que l'axe inférieur de direction (21) porte à son extrémité destinée à être reliée au pignon de crémaillère (27) un double joint de cardan (25).

3.- Colonne de direction suivant la revendication 2, dans le cas où la partie du support (5) constituant une paroi (16) vient fermer, lors du montage de la colonne de direction, un espace situé au-dessus d'un élément de structure inférieur (10) du véhicule, caractérisée par le fait que la partie terminale (25a) du double joint de cardan (25) présente une position relevée (25'a) permettant un montage, de préférence automatisé, de la colonne (4) avec un déplacement de la colonne pré-assemblée (4) dans une direction horizontale uniquement, l'élément terminal (25a) du double joint de cardan (25) étant ensuite relié au pignon de crémaillère (27), à l'intérieur du compartiment moteur (3).

4.- Colonne de direction suivant l'une quelconque des revendications 1, 2 et 3, caractérisée par le fait que le support (5) est réalisé en une seule pièce.

5.- Colonne de direction suivant l'une quelconque des revendications 1, 2 et 3, caractérisé par le fait que le support (5) comporte un élément principal et des éléments rapportés sur cet élément principal.

6.- Colonne de direction suivant l'une quelconque des revendications 1 à 5, caractérisée par le fait que le palier de traversée (24) est constitué par une rotule sphérique disposée autour de l'axe inférieur de direction (21) et logée à l'intérieur d'une ouverture (31) traversant la paroi (16) du support (1).

7.- Colonne de direction suivant la revendication 6, caractérisée par le fait que l'ouverture (31) est ménagée à l'intérieur d'un manchon (16a) solidaire de la paroi (16) du support (5) et que le palier à rotule (24) est maintenu à l'intérieur du manchon (16a), par au moins un coussinet (32) en appui sur la rotule (24).

8.- Colonne de direction suivant la revendication 7, caractérisée par le fait que des joints à lèvres (34, 35)) sont disposés dans l'ouverture intérieure (31) du manchon (16a), de part et d'autre du palier à rotule (24), en position d'étanchéité autour de l'axe inférieur de direction (21).

9.- Colonne de direction suivant la revendication 6, caractérisée par le fait que le palier à rotule (24) est disposé dans un coussinet de forme correspondante (40) constituant des joints à lèvres (44, 45) réalisant l'étanchéité autour de l'axe inférieur de direction (21), de part et d'autre du palier à rotule (24).

10.- Colonne de direction suivant l'une quelconque des revendications 1 à 9, caractérisée par le fait que la paroi (16) du support (5) est revêtue sur sa face destinée à être dirigée vers l'habitacle (2) d'une couche de matériau d'isolation acoustique (30).

**Claims**

1. A preassembled vehicle steering column comprising an upper shaft (20) which bears a steering wheel (19) at one of its ends and is disposed inside the driving compartment (2) of the vehicle when the column (4) is mounted on the vehicle, and a lower shaft (21) which is articulated by one of its ends to the end of the upper shaft (20) opposite from the steering wheel (19) and is connected by its other end, when the column is mounted on the vehicle, to a rack pinion (27) disposed in the engine compartment (3) of the vehicle, to a rack pinion (27) disposed in the engine compartment (3) of the vehicle, characterized in that it comprises a single preassembled support bearing the upper shaft (20) via two bearings (17, 18) and the lower shaft (21) via an accoustically insulating cross bearing (24) disposed on a portion (16) of the support (5) forming a separating wall between the driving compartment (2) and the engine compartment (3).

2. A steering wheel according to claim 1, characterized in that the lower steering shaft (21) bears a double cardan joint (25) at its end adapted to be connected to the rack pinion (27).

3. A steering wheel according to claim 2, wherein during the assembly of the steering column that portion of the support (5) which forms a wall (16) closes a space lying above a lower structural element (10) of the vehicle, characterized in that the terminal portion (25a) of the double cardan joint (25) has a raised portion (25′a) allowing a preferably automated mounting of the column (4) with a displacement of a preassembled column (4) in solely a horizontal direction, the terminal element (25a) of the double cardan joint (25) being then connected to the rack pinion (27) inside the engine compartment (3).

4. A steering wheel according to any of claims 1, 2 and 3, characterized in that the support (5) is made in one piece.

5. A steering wheel according to any of claims 1, 2 and 3, characterized in that the support (5) comprises a main element and elements placed on such main element.

6. A steering wheel according to any of claims 1 to 5, characterized in that the cross bearing (24) is formed by a spherical rocker disposed around the lower steering shaft (21) and received inside an aperture (31) extending through the walls (16) of the support (1).

7. A steering wheel according to claim 6, characterized in that the aperture (31) is provided inside a sleeve (16a) connected to the walls (16) of the support (5), and the rocker bearing (24) is retained inside the sleeve (16a) by at least one bearing (32) which bears against the rocker (24).

8. A steering wheel according to claim 7, characterized in that lip seals (34, 35) are disposed in the internal aperture (31) of the sleeve (16a) on either side of the rocker bearing (24) in a sealing position around the lower steering shaft (21).

9. A steering wheel according to claim 8, characterized in that the rocker bearing (24) is disposed in a bearing (40) of matching shape forming lip seals (44, 45) providing sealing around the lower steering shaft (21) on either side of the rocker bearing (24).

10. A steering wheel according to any of claims 1 to 9, characterized in that the wall (16) of the support (5) has a coating of accoustic insulating material (30) on its face intended to be directed towards the driving compartment (2).

**Patentansprüche**

1. Vormontierte Fahrzeuglenksäule mit einer oberen Achse (20), welche ein Lenkrad (19) an einem ihrer Enden trägt, die im Inneren eines Karosseriegehäuses (2) des Fahrzeugs plaziert ist, wenn die Säule (4) an dem Fahrzeug montiert ist, und einer unteren Achse (21), die durch eines seiner Enden auf dem Ende der oberen Achse (20), dem Lenkrad (19) gegenüberliegend drehbar und mit seinem anderen Ende, wenn die Säule an dem Fahrzeug montiert ist, mit einem Zahnstangenritzel (27) verbunden ist, das in dem Motorraum (3) des Fahrzeugs angeordnet ist, dadurch gekennzeichnet, daß sie ein vormontiertes einzelnes Lager bzw. eine Aufnahme aufweist, die die obere Achse (20) mittels zweier Lager (17, 18) und die untere Achse (21) mittels eines akustisch gedämmten Durchquerungslagers (24) aufweist, das auf einem Bereich (16) der Aufnahme (15) angeordnet ist, welche eine Trennwand zwischen dem Karosseriegehäuse (2) und dem Motorraum (3) bildet.

2. Lenksäule nach Anspruch 1, dadurch gekennzeichnet, daß die untere Lenkachse (21) an ihrem Ende, das für die Verbindung mit dem Zahnstangenritzel (27) bestimmt ist, ein doppeltes Kardangelenk oder eine -verbindung (25) aufweist.

3. Lenksäule nach Anspruch 2, in dem Fall, wo der Lagerbereich (5) eine Wand (16) bildet, welche bei der Montage der Lenksäule einen Raum schließt, der oberhalb eines unteren Strukturelements (10) des Fahrzeugs angeordnet ist, dadurch gekennzeichnet, daß der Endbereich (25a) des doppelten Kardangelenks (25) eine angehobene Stellung (25′a) aufweist, die eine vorzugsweise automatisierte Montage der Säule (4) mit einer Verschiebung der vormontierten Säule (4) in nur eine horizontale Richtung erlaubt, wobei das Endelement (25a) des doppelten Kardangelenks (25) danach mit dem Zahnstangenritzel (27) im Inneren des Motorraums (3) verbunden wird.

4. Lenksäule nach einem der Ansprüche 1, 2 oder 3, dadurch gekennzeichnet, daß die Auflage oder das Lager (5) aus einem einzigen Stück gebildet ist.

5. Lenksäule nach einem der Ansprüche 1, 2 oder 3, dadurch gekennzeichnet, daß das Lager oder die Auflage (5) ein Hauptelement und Elemente aufweist, die an dem Hauptelement angebracht sind.

6. Lenksäule nach einem der Ansprüche 1 bis 5, dadurch gekennzeichnet, daß das Durchquerungslager (24) aus einem Kugelgelenk gebildet ist, das um die untere Lenkachse (21) angeordnet und im Inneren einer Öffnung (31) aufgenommen ist, die die Seitenwand (16) der Auflage (1) durchquert.

7. Lenksäule nach Anspruch 6, dadurch gekennzeichnet, daß die Öffnung (31) im Inneren einer Muffe (16a) ausgebildet ist, die mit der Seitenwand (16) der Aufnahme (5) verbunden ist, und daß das Gelenklager (24) im Inneren der Muffe (16a) durch wenigstens eine Lagerbuchse (32) in Anlage auf das Gelenk (24) gehalten wird.

8. Lenksäule nach Anspruch 7, dadurch gekennzeichnet, daß die Lippendichtungen (34, 35) in der inneren Öffnung (31) der Muffe (16a) einerseits und andererseits des Kugelgelenklagers (24) in dichtender Position um die untere Lenkachse (21) angeordnet sind.

9. Lenksäule nach Anspruch 6, dadurch gekennzeichnet, daß das Kugelgelenklager (24) in einem Lager von entsprechender Form (40) angeordnet ist, welches die Lippendichtungen (44, 45) bildet, die die Dichtheit um die untere Lenkachse (21) einerseits und andererseits des Gelenklagers (24) erzeugen.

10. Lenksäule nach einem der Ansprüche 1 bis 9, dadurch gekennzeichnet, daß die Seitenwand (16) der Aufnahme (5) an seiner Seite, die dazu bestimmt ist auf das Karosseriegehäuse (2) gerichtet zu werden, mit einer Schicht aus akustisch dämmendem Material (30) bedeckt ist.

EP 0 266 255 B1

# FIG.1

# FIG.2

# FIG.3

EP 0 266 255 B1